# EUROPEAN PATENT APPLICATION

(11) **EP 4 410 443 A1**
(43) Date of publication of application: **07.08.2024**
(21) Application number: 23847860.6
(22) Date of filing: 04.08.2023
(51) Int. Cl.: B09B 3/70

(54) **SECONDARY ALUMINUM ASH PROCESSING APPARATUS AND METHOD**

(30) Priority: 28.11.2022 CN 202211505167
(71) Applicant: Zhengzhou Non-Ferrous Metals Research Institute Co. Ltd of Chalco, Shangjie District Zhengzhou, Henan 450041 (CN)
(72) Inventor: KANG, Zeshuang, Zhengzhou, Henan 450041 (CN); LIU, Zhongkai, Zhengzhou, Henan 450041 (CN); TIAN, Ye, Zhengzhou, Henan 450041 (CN); LI, Huaxia, Zhengzhou, Henan 450041 (CN); ZHANG, Yongchen, Zhengzhou, Henan 450041 (CN); YAN, Kun, Zhengzhou, Henan 450041 (CN); ZHANG, Tengfei, Zhengzhou, Henan 450041 (CN); CHUI, Yingfeng, Zhengzhou, Henan 450041 (CN); XU, Gangzheng, Zhengzhou, Henan 450041 (CN); ZHANG, Yanli, Zhengzhou, Henan 450041 (CN); SUN, Fengjuan, Zhengzhou, Henan 450041 (CN); FAN, Zekun, Zhengzhou, Henan 450041 (CN)
(74) Representative: Zaboliene, Reda
(86) International application number: PCT/CN2023/111166
(87) International publication number: WO 2024/113940

(57) **Abstract**

Disclosed is device for treating secondary aluminum ash, including: batching tank, provided with feeding port for adding aluminum ash; temperature reaction unit; thermal insulation reaction unit; the batching tank, the temperature reaction unit and the thermal insulation reaction unit are sequentially in communication with one another; the temperature reaction unit includes n temperature reaction tanks connected in series, which are respectively first-stage temperature reaction tank, second-stage temperature reaction tank ... and n^{th}-stage temperature reaction tank, and the n temperature reaction tanks connected in series each are provided with first gas outlet for exporting gas; and the thermal insulation reaction unit includes m thermal insulation reaction tanks connected in series, which are respectively first-stage thermal insulation reaction tank, second-stage thermal insulation reaction tank ...and m^{th}-stage thermal insulation reaction tank, and the m thermal insulation reaction tanks connected in series each are all provided with second gas outlet for exporting gas.

## Description

### CROSS-REFERENCE TO RELATED APPLICATION

The application claims a priority of Chinese Patent Application No. 202211505167.4, filed on November 28, 2022, the invention of which is hereby incorporated by reference in its entirety.

### TECHNICAL FIELD

The invention relates to a technical field of aluminum industry, and in particular to a device and method for treating a secondary aluminum ash.

### BACKGROUND

In recent years, with the improvement of people's consumption level of aluminum, a processing capacity of an aluminum material is continuously rising. Due to the energy shortage and pressure for environmental protection, a capacity of producing a primary aluminum with a high energy consumption is constrained and limited, and the waste aluminum recycling industry is constantly upgraded and expanded, making an output of an aluminum ash is gradually increased. The aluminum ash is a solid hazardous waste produced in the industrial production process of aluminum. According to different aluminum contents in aluminum ashes, the aluminum ashes are classified into a primary aluminum ash and a secondary aluminum ash. The aluminum ash residue slagged from a smelting furnace is referred to as the primary aluminum ash, also known as "white aluminum ash". The secondary aluminum ash is the aluminum ash produced after a metal aluminum is extracted from the primary aluminum ash. In the secondary aluminum ash, the main aluminum-containing substances are Al₂O₃, AlN, Al, MgAl₂O₄ and Al₄C₃ and the like; the main chloride salt substances are NaCl and KCl and the like; the main fluorine-containing substances are CaF₂ and Na₃AlF₆ and the like; and there are also certain oxides for example SiO₂ and Fe₂O₃ and the like. The secondary aluminum ash has reactivity and leaching toxicity due to AlN, elemental Al and fluoride and the like contained therein, and was listed in the "National Hazardous Waste List (2021 edition)" in 2021, and thus is required to be utilized and treated according to hazardous waste standards.

The existing methods for treating the secondary aluminum ash mainly have the problem that a treatment of a "single-stage intermittent reaction" is performed on the secondary aluminum ash by relying on a single-stage intermittent reaction system, that is, reaction is performed on the secondary aluminum ash intermittently in a same reaction space. The treatment of the single-stage intermittent reaction is performed on the secondary aluminum, and the active components in the secondary aluminum ash at different reaction stages are mainly AlN, elemental Al and Al₄C₃. Since reaction degrees and reaction rates of the AlN, elemental Al and Al₄C₃ are different, so that there are different gas production rates and gas outputs at different stages in the reaction process of the secondary aluminum ash, and thus the gas production fluctuates greatly and the reaction rate is difficult to control. That is to say, as the reaction process of the secondary aluminum ash processes, a state of a reaction system changes greatly, which is not easy to be controlled, thus it is difficult to stably operate for the single-stage intermittent reaction.

### SUMMARY

By utilizing one or more embodiments of the invention, the technical problem that it is difficult to stably operate for the single-stage intermittent reaction is solved.

According to a first aspect of the invention, a device for treating a secondary aluminum ash is provided, including: a batching tank, provided with a feeding port for adding aluminum ash; a temperature reaction unit; and a thermal insulation reaction unit; wherein, the batching tank, the temperature reaction unit and the thermal insulation reaction unit are sequentially in communication with one another; the temperature reaction unit includes n temperature reaction tanks connected in series, which are respectively a first-stage temperature reaction tank, a second-stage temperature reaction tank ... and an n^{th}-stage temperature reaction tank, and the n temperature reaction tanks connected in series each are provided with a first gas outlet for exporting gas; and the thermal insulation reaction unit includes m thermal insulation reaction tanks connected in series, which are respectively a first-stage thermal insulation reaction tank, a second-stage thermal insulation reaction tank ...and an m^{th}-stage thermal insulation reaction tank; and the m thermal insulation reaction tanks connected in series each are provided with a second gas outlet for exporting gas.

According to a second aspect of the invention, a method for treating a secondary aluminum ash is provided, including the following steps: providing the device for treating the secondary aluminum ash according to any embodiment of the first aspect; adding the secondary aluminum ash and water into the batching tank from the feeding port, to form a first slurry in the batching tank; importing the first slurry into the first-stage temperature reaction tank, and simultaneously adding a stabilizer for promoting a hydrolysis of an elemental Al and Al₄C₃ and inhibiting a hydrolysis of AlN into the first-stage temperature reaction tank, to form a second slurry; making the second slurry flow from the first-stage temperature reaction tank to the n^{th}-stage temperature reaction tank, to form a third slurry in the n^{th}-stage temperature reaction tank; and collecting a gas generated by reactions in the first-stage temperature reaction tank to the n^{th}-stage temperature reaction tank; importing, the third slurry into the first-stage thermal insulation reaction tank; and simultaneously adding, an activator for enhancing a hydrolysis activity of AlN into the first-stage thermal insulation reaction tank, to form a fourth slurry; making the fourth slurry flow from the first-stage thermal insulation reaction tank to the n^{th}-stage thermal insulation reaction tank, and adding, a desalter to the n^{th}-stage thermal insulation reaction tank, so that the desalter is mixed and reacts with the fourth slurry to form a fifth slurry, wherein the desalter is used for increasing a particle size of solid particles and promoting a precipitation of salt substances; and collecting a gas generated by reactions in the first-stage thermal insulation reaction tank to the n^{th}-stage thermal insulation reaction tank; and filtering the fifth slurry to obtain a filtrate, and concentrating and crystallizing the filtrate.

### BRIEF DESCRIPTION OF THE DRAWINGS

Drawings herein, which are incorporated in and constitute a part of the specification, illustrate embodiments consistent with the invention, and serve to, together with the specification, explain the principles of the invention.

In order to explain technical solutions in the embodiments of the invention or the prior art more clearly, the drawings required in the description of the embodiments or the prior art will be briefly introduced below. Apparently, for a person skilled in the art, other drawings may be obtained according to these drawings without paying creative labor.

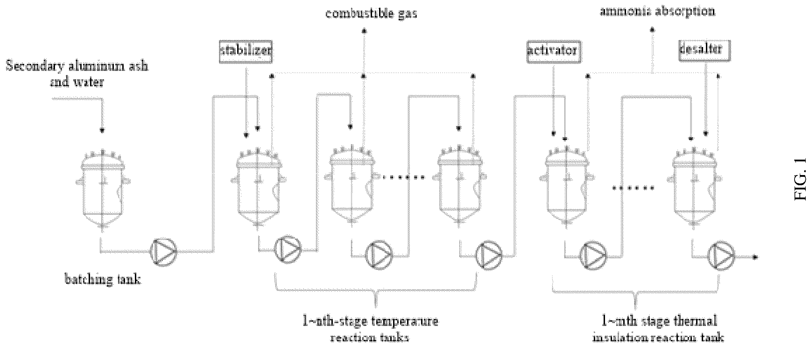

FIG.1 shows a structural schematic diagram of a device for treating a secondary aluminum ash according to some embodiments of the invention.

### DETAILED DESCRIPTIONN

In order to make a purpose, technical solutions and advantages of embodiments of the invention more clear, technical solutions in the embodiments of the invention will be described clearly and completely with the drawings. Apparently, the described embodiments are a portion of the embodiments of the invention, but not all the embodiments. Based on the embodiments in the invention, all other embodiments obtained by a person skilled in the art without creative work belong to the protection scope of the invention.

Unless otherwise specified, terms used in the context should be understood as they commonly used in the art. Therefore, unless otherwise defined, all technical and scientific terms used herein have the same meaning as commonly understood by a person skilled in the art to which the invention belongs. In case of conflict, this specification takes precedence.

Unless otherwise specified, all kinds of raw materials, reagents, instruments and apparatuses used in the invention can be available in the market or prepared by existing methods.

An existing device and method for treating a secondary aluminum ash have a technical problem that it is difficult to stably operate for the single-stage intermittent reaction.

In order to solve the above-mentioned technical problem, the technical solutions provided by the embodiments of the invention have the following general idea.

In a first aspect, referring to FIG. 1, a device for treating a secondary aluminum ash is provided according to some embodiments of the invention, which may include a batching tank, a temperature reaction unit and a thermal insulation reaction unit that are sequentially in communication with one another. The batching tank is provided with a feeding port for adding the secondary aluminum ash. The temperature reaction unit includes n temperature reaction tanks connected in series, which are respectively a first-stage temperature reaction tank, a second-stage temperature reaction tank ... and an n^{th}-stage temperature reaction tank, and the n temperature reaction tanks connected in series each are provided with a first gas outlet for exporting gas. The thermal insulation reaction unit includes m thermal insulation reaction tanks connected in series, which are respectively a first-stage thermal insulation reaction tank, a second-stage thermal insulation reaction tank ...and an m^{th}-stage thermal insulation reaction tank, and the m thermal insulation reaction tanks connected in series each are provided with a second gas outlet for exporting gas.

The batching tank is used for batching, and a process of batching is to mix the secondary aluminum ash and water uniformly. The batching tank is equipped with devices for uniformly mixing the secondary aluminum ash and the water. These devices are common devices in the art, for example a stirring paddle and a mixing screw, and the like.

As a reaction process between the secondary aluminum ash and the water progresses, a state of reaction systems constantly changed. The reaction systems at different reaction stages may, by providing N temperature reaction tanks and M thermal insulation reaction tanks, be controlled in different tanks.

Active components in the secondary aluminum ash at different reaction stages are mainly AlN, an elemental Al and Al₄C₃, and reaction degrees and rates of the AlN, elemental Al and Al₄C₃ are different. Reaction activities of the elemental Al and Al₄C₃ are relatively high. The elemental Al and Al₄C₃ mainly react in the temperature reaction unit, and generate a combustible gas containing hydrogen and hydrocarbons and the like during the reaction. AlN mainly reacts in the thermal insulation reaction unit, and mainly generates an ammonia during the reaction.

In the invention, by providing a plurality of temperature reaction tanks connected in series and a plurality of thermal insulation reaction tanks connected in series, the reaction systems at different reaction stages may react in different tanks, so that the reaction progress is easily controlled. The elemental Al and Al₄C₃ may be caused to react mainly in the temperature reaction unit, and AlN may be caused to mainly react in the thermal insulation reaction unit, thus it is easy to collect the combustible gas and the ammonia generated during the reaction respectively. The device for treating the secondary aluminum ash disclosed by the invention is simple in structure, and easy to be implemented with a large scale.

In some embodiments of the invention, the n is an integer obtained by rounding a result calculated by a formula of 0.45+58×X - 260×X²; where, X=A+B, A is a mass ratio of an elemental Al in the secondary aluminum ash to the secondary aluminum ash, and B is a mass ratio of Al₄C₃ in the secondary aluminum ash to the secondary aluminum ash.

The above-mentioned formula is obtained as follows. For the secondary aluminum ashes with different contents of the elemental Al, Al₄C₃ and AlN, continuous reaction experiments are carried out by using reaction tanks connected in series, and several groups of data of hydrolysis reaction laws of the secondary aluminum ash are obtained. Values of X in each group of data are the same, and n is a variable. By monitoring the reaction process, a value of n, which is beneficial to the full reaction of the elemental Al and Al₄C₃ and may significantly inhibit the reaction of AlN, is found. In different groups of data, X has different values, thus a series of values of X, and values of n which are beneficial to the full reaction of Al and Al₄C₃ are obtained. It is observed that, there is a poor linear relationship between n and X. As X increases, n exhibits a trend of rapid increasing at first and slow increasing thereafter. Therefore, a quadratic equation is used to fit the curve, and the fitting result is good. Consequently, the relationship between X and a quantity n of the temperature reaction tanks in the invention conforms to the unary quadratic equation, and the above-mentioned formula is obtained by combining numerical simulation calculation.

In some embodiments of the present invention, the m is an integer obtained by rounding a result calculated by a formula of 22×Z+1.2;
where, Z is a mass ratio of AlN in the secondary aluminum ash to the secondary aluminum ash.

The above-mentioned formula is obtained as follows. For the secondary aluminum ashes with different contents of the elemental Al, Al₄C₃ and AlN, continuous reaction experiments are carried out in continuous reaction tanks, and several groups of data of the hydrolysis reaction law of the secondary aluminum ash are obtained. In each group of data, Z has same values, and m is a variable. By monitoring the reaction process, a value of m that enable AlN to be fully hydrolyzed is found. In different groups of data, z has different values, thus a series of values if z, and values of m which are beneficial to the full hydrolysis of AlN are obtained. It is observed that, there is a good linear relationship between m and z, thus the fitting result is better when fitting is performed by the linear equation. Consequently, the relationship between the mass ratio Z of AlN to the secondary aluminum ash and a quantity m of the thermal insulation reaction tanks in the invention conforms to a linear equation with one unknown. As Z increases, m exhibits a trend of increasing linearly, thus the above-mentioned formula is obtained by combining a numerical simulation calculation.

In a second aspect, according to embodiments of the invention, a method for treating a secondary aluminum ash is provided, which includes the following steps:
S1: providing the device for treating the secondary aluminum ash according to any embodiment above-mentioned;
S2: adding the secondary aluminum ash and water into the batching tank from the feeding port, to form a first slurry in the batching tank;
S3: importing the first slurry into the first-stage temperature reaction tank; and simultaneously adding a stabilizer for promoting a hydrolysis of an elemental Al and A14C3 and inhibiting a hydrolysis of AlN into the first-stage temperature reaction tank, to form a second slurry;
S4: making the second slurry flow from the first-stage temperature reaction tank to the n^{th}-stage temperature reaction tank, to form a third slurry in the n^{th}-stage temperature reaction tank, and collecting a gas generated by reactions in the first-stage temperature reaction tank to the n^{th}-stage temperature reaction tank;
S5: importing the third slurry into the first-stage thermal insulation reaction tank; and simultaneously adding an activator for enhancing a hydrolysis activity of AlN into the first-stage thermal insulation reaction tank, to form a fourth slurry;
S6: making the fourth slurry flow from the first-stage thermal insulation reaction tank to the n^{th}-stage thermal insulation reaction tank; and adding a desalter to the n^{th}-stage thermal insulation reaction tank, wherein the desalter is used for increasing a particle size of solid particles and promoting a precipitation of salt substances; the desalter is mixed and reacted with the fourth slurry to form a fifth slurry; and collecting a gas generated by the reactions in the first-stage thermal insulation reaction tank to the n^{th}-stage thermal insulation reaction tank; and
filtering the fifth slurry to obtain a filtrate, and concentrating and crystallizing the filtrate.

A person skilled in the art may understand that, a liquid phase in the reaction process always exists in a form of a slurry. The slurry in the reaction system may be powered by conventional methods in the art to gradually import the slurry from the batching tank into the n^{th}-stage thermal insulation reaction tank. As an example, methods of powering the slurry may be to install a liquid pump, and use the liquid pump to provide a power for the flow of the slurry. Alternatively, the batching tank, the first-stage temperature reaction tank to the n^{th}-stage temperature reaction tank, and the first-stage thermal insulation reaction tank to the n^{th}-stage thermal insulation reaction tank are disposed in sequence from high to low, thus the slurry is driven to flow from the batching tank into the n^{th}-stage thermal insulation reaction tank under the self-gravity of the slurry, and a regulation valve is provided to control a flow amount of the slurry.

In an actual production, the method for treating the secondary aluminum ash is generally to adopt a mode of a continuous production, that is, the secondary aluminum ash and the water are continuously added into the feeding port, and the slurry is continuously discharged from the n^{th}-stage thermal insulation reaction tank.

In some embodiments of the invention, a time from adding the secondary aluminum ash into the batching tank to forming the fifth slurry is between 30 min and 600 min.

By limiting the time from feeding to discharging of a material, the time during which the slurry stays in each tank, including the temperature reaction tank and the thermal insulation reaction tank, may be limited, so that the slurry is at a controlled reaction stage in each tank.

In the actual production, the time from feeding to discharging of the material may also be adjusted according to the temperature, and the amount of the stabilizer and the activator added.

In some embodiments of the invention, in step S2, a mass ratio of the secondary aluminum ash to the water may be 1: (1~5).

The purpose of controlling the mass ratio of the secondary aluminum ash to water is to adjust a concentration, viscosity and other properties of the first slurry, to make the first slurry be easily imported into subsequent devices.

In some embodiments of the invention, various slurries account for 30%-50% of the volumes of the batching tank, and various stage temperature reaction tanks and various stage thermal insulation reaction tanks.

The purpose that the volumes of various slurries are set to 30%-50% of the volumes of the batching tank, various stage temperature reaction tanks and various stage thermal insulation reaction tanks is, to control a volume proportion of the slurry in each tank, so that the slurry can be prevented from generating a large amount of gas under the action of stirring during the reaction process of slurry. The large amount of gas may drive a liquid surface in the tank to float upwards, thereby affecting the gas to be discharged and/or causing the slurry to block the first air outlet and/or the second air outlet.

In some embodiments of the invention, X=A+B, where A is a mass ratio of an elemental Al in the secondary aluminum ash to the secondary aluminum ash; B is a mass ratio of Al₄C₃ in the secondary aluminum ash to the secondary aluminum ash, and X is less than or equal to 10%.

The purpose of controlling X less than or equal to 10%, is to control the mass content of the elemental Al and Al₄C₃ in the secondary aluminum ash, to reduce a large amount of heat released during the hydrolysis process of the elemental Al and Al₄C₃ and avoid an influence of the elemental Al and Al₄C₃ on the hydrolysis of AlN in the temperature reaction stage. In some embodiments, generally, the mass ratio of the elemental Al and Al₄C₃ in the secondary aluminum ash screened by a ball milling is generally below 10%.

In some embodiments of the invention, a temperature in the batching tank is controlled as 10°C~30°C.

The purpose of controlling the temperature in the batching tank, is to reduce the reaction speed of the secondary aluminum ash in the batching tank, to reduce the reaction of the secondary aluminum ash in the batching tank as far as possible.

In order to control the temperature in the batching tank, a cooling device may be provided. As an example, a circulating water-cooling system may be used for cooling.

In some embodiments of the invention, for the temperature reaction tanks connected in series, temperatures from the first-stage temperature reaction tank to the n^{th}-stage temperature reaction tank are gradually increased. A temperature of the first-stage temperature reaction tank may be 10°C~30°C, and a temperature of the n^{th}-stage temperature reaction tank may be 40°C ~60°C; and/or, temperatures of all the thermal insulation reaction tanks may be 90 °C ~ 100 °C.

For the temperature reaction tanks connected in series, a gradual increase in temperature from the first-stage temperature reaction tank to the n^{th}-stage temperature reaction tank is conducive to promoting ordered hydrolyses of the elemental Al and Al₄C₃. Too low temperatures of the temperature reaction tanks are not conducive to the hydrolyses of the elemental Al and Al₄C₃. Too high temperatures of the temperature reaction tanks may cause a large quantity of the AlN to be hydrolyzed.

The higher temperatures in the thermal insulation reaction tanks are conductive to the full hydrolysis of AlN.

In some embodiments of the invention, the stabilizer may include at least one selected from a group consisting of a calcium dihydrogen phosphate, calcium hydroxy phosphate, ammonium ferric citrate and sodium alginate; and/or, the activator may include at least one selected from a group consisting of a steel slag micro powder, dry desulfurization ash, modified bentonite and hydroxyapatite; and/or, the desalter may include at least one selected from a group consisting of a polysilicate aluminum ferric sulfate, fly ash and desulfurized gypsum.

In some embodiments of the invention, an addition amount of the stabilizer is 0.5%-1.5% of the mass of the secondary aluminum ash; and/or, an addition amount of the activator is 0.5%-2% of the mass of the secondary aluminum ash; and/or, an addition amount of the stabilizer of the desalter is 0.5%-1.5% of the mass of the secondary aluminum ash.

A main effect of the stabilizer is to disperse the secondary aluminum ash and fine-grained materials, to fully disperse the slurry. At the same time, the hydrolysis reaction of the AlN can be inhibited by the stabilizer, to realize the selective hydrolyses of the elemental Al and Al₄C₃, and to achieve the stable release of a combustible gas mixed by H₂ and CH₄. However, a smaller addition amount of the stabilizer is easy to cause a large quantity of AlN's hydrolysis reaction in the secondary aluminum ash, and a larger addition amount of the stabilizer is easy to make the hydrolysis reaction of AlN difficult to be carried out after the subsequent temperature rises.

A main effect of the activator is to prevent the aluminum hydroxide generated by the hydrolysis reaction of AlN from forming a gel coating film, break the gel coating film of aluminum hydroxide, and promote AlN to be thoroughly contacted with the water. However, a larger addition amount of the activator will cause a drastic one-time hydrolysis reaction, and a uncontrollable reaction temperature, and further too many impurities introduced. A smaller addition amount of the activator will affect an efficiency of the hydrolysis reaction of AlN.

A main effect of the desalter is to improve a particle size of high-alumina materials and a filtration performance of the slurry after the secondary aluminum ash reacts, reduce the generation of fine particles, and promote a soluble salt to be precipitated from particles of the secondary aluminum ash, so that the desalination efficiency is improved and a moisture content of a filter cake is reduced. However, a larger addition amount of desalter may be easy to cause more impurities in the high-alumina materials. A smaller addition amount of desalter may cause the filtration property of the slurry to be reduced, thus the filtered filter cake will have a higher moisture content, and the high-alumina materials will have a higher salt content, which are unfavorable to a subsequent drying and utilization of the high-alumina materials.

Based on the above-mentioned description, the invention is further elaborated in conjunction with specific examples. It should be understood that, these examples are merely used to illustrate the invention, and not used to limit the scope of the invention. Experiments without specific conditions in the following examples are generally performed according to national standards. If there is no corresponding national standard, the experiments are carried out according to a common international standard, conventional conditions or the conditions suggested by the manufacturer.

### First example

A device and method for treating a secondary aluminum ash according to embodiments of the invention are as follows.

The secondary aluminum ash is provided, in which a mass content of AlN is 13.72%, and a sum of the mass contents of an elemental Al and Al₄C₃ is 1.25%.

A result calculated by the formula of 0.45+58×X-260×X² is rounded, to obtain an integer of 1.

Where, X=A+B; A is a mass ratio of the elemental Al in the secondary aluminum ash to the secondary aluminum ash; and B is a mass ratio of Al₄C₃ in the secondary aluminum ash to the secondary aluminum ash. That is, X is a sum of the mass contents of the elemental Al and Al₄C₃ in the secondary aluminum ash.

A result calculated by the formula of 22×Z+1.2 is rounded, to obtain an integer of 4, where Z is the mass ratio of AlN in the secondary aluminum ash to the secondary aluminum ash.

That is, the device for treating the secondary aluminum ash includes a first-stage temperature reaction tank, and a first-stage thermal insulation reaction tank to a fourth-stage thermal insulation reaction tank.

The above-mentioned secondary aluminum ash is treated as follows.

According to a mass ratio of 1:1, the secondary aluminum ash and the water are weighed, and added into the batching tank for batching, to obtain a slurry. In a conveying process of the slurry, the slurry accounts for 50% of the volumes of the batching tank and various reaction tanks. A temperature of batching of the slurry in the batching tank is controlled as 30°C. The slurry enters the first-stage temperature reaction tank, and the calcium dihydrogen phosphate is added into the first-stage temperature reaction tank. The addition amount of the calcium dihydrogen phosphate is 0.5% of the mass of the secondary aluminum ash. The slurry enters the first-stage temperature reaction tank from the batching tank, and the temperature of the slurry rises to 40°C in the first-stage temperature reaction tank. Then the slurry sequentially enters the first-stage thermal insulation reaction tank to the fourth-stage thermal insulation reaction tank. Holding temperatures of the first-stage thermal insulation reaction tank to the fourth-stage thermal insulation reaction tank may all be 90°C. The Hydroxyapatite is added into the first stage thermal insulation reaction tank (the first-stage thermal insulation reaction tank), and the fly ash is added into the last stage thermal insulation reaction tank (the fourth-stage thermal insulation reaction tank). The addition amount of the hydroxyapatite is 0.85% of the mass of the secondary aluminum ash, and the addition amount of the fly ash is 1% of the mass of the secondary aluminum ash. A time from adding the secondary aluminum ash into the batching tank to forming a fifth slurry is 310 min. A gas generated in the first-stage temperature reaction tank may, after cooled and collected, enter a combustible gas collection system as a fuel for combustion. Volume ratios of hydrogen and methane in the collected gas are 88.12% and 5.28%, respectively. A volume ratio of an ammonia gas in a gas generated in the first-stage thermal insulation reaction tank to the fourth-stage thermal insulation reaction tank is 96.43%. An ammonia water is prepared from the ammonia gas by a cooling water absorption system. A liquid-solid separation is performed on the slurry after reaction to obtain a filter cake. A moisture content of the filter cake is 21.36%. The filter cake is dried to obtain a recycled high-aluminum material. In the recycled high alumina material, the mass content of AlN is 0.152%; the sum of the mass contents of the elemental Al and Al₄C₃ is 0.052%; and the mass content of a soluble salt is 0.291 %.

### Second Example

A device and method for treating a secondary aluminum ash according to embodiments of the invention are as follows.

The secondary aluminum ash is provided, in which a mass content of AlN is 32.63%, and a sum of the mass contents of the elemental Al and Al₄C₃ is 3.48%.

A result calculated by the formula of 0.45+58×X-260×X² is rounded, to obtain an integer of 2.

Where, X=A+B; A is a mass ratio of the elemental Al in the secondary aluminum ash to the secondary aluminum ash; and B is a mass ratio of Al₄C₃ in the secondary aluminum ash to the secondary aluminum ash. That is, X is the sum of the mass contents of the elemental Al and Al₄C₃ in the secondary aluminum ash.

A result calculated by the formula of 22×Z+1.2 is rounded, to obtain an integer of 8, where Z is the mass ratio of AlN in the secondary aluminum ash to the secondary aluminum ash.

That is, the device for treating the secondary aluminum ash includes a first-stage temperature reaction tank and a second-stage temperature reaction tank, and a first-stage thermal insulation reaction tank to an eighth-stage thermal insulation reaction tank.

The above-mentioned secondary aluminum ash is treated as follows.

According to a mass ratio of 1:4, the secondary aluminum ash and the water are weighed, and added into the batching tank for batching, to obtain a slurry. In a conveying process of the slurry, the slurry accounts for 40% of the volumes of the batching tank and various reaction tanks. A temperature of batching of the slurry in the batching tank is controlled as 23 °C. Then the slurry enters the first-stage temperature reaction tank and then the second-stage temperature reaction tank, and the ammonium ferric citrate is added into the first-stage temperature reaction tank. The addition amount of the ammonium ferric citrate is 0.8% of the mass of the secondary aluminum ash. After the slurry reacts in the first-stage temperature reaction tank and the second-stage temperature reaction tank, the temperature of the slurry rises from 23°C to 45 °C. Then the slurry sequentially enters the first-stage thermal insulation reaction tank to the eighth-stage thermal insulation reaction tank. Holding temperatures of the first-stage insulation reaction tank to the eighth-stage insulation reaction tank are 95°C. The dry desulfurization ash is added into the first stage thermal insulation reaction tank (first-stage thermal insulation reaction tank), and the desulfurization gypsum is added into the last stage thermal insulation reaction tank (eighth-stage thermal insulation reaction tank). The addition amount of the dry desulfurization ash is 2.0% of the mass of the secondary aluminum ash, and the addition amount of the desulfurization gypsum is 1.2% of the mass of the secondary aluminum ash. A time from adding the secondary aluminum ash into the batching tank to forming a fifth slurry is 600 min. A gas generated in the first-stage temperature reaction tank and the second-stage temperature reaction tank, after cooled and collected, enters a combustible gas collection system, as a fuel for combustion. Volume ratios of hydrogen and methane in the collected gas are 85.36% and 12.52%, respectively. A volume ratio of an ammonia gas in a gas generated in the first-stage thermal insulation reaction tank to the eighth-stage thermal insulation reaction tank is 97.15%. An ammonia water is prepared from the ammonia gas by a cooling water absorption system. A liquid-solid separation is performed on the slurry after reaction to obtain a filter cake. A moisture content of the filter cake obtained is 19.78%. The filter cake is dried to obtain a recycled high-aluminum material. In the recycled high alumina material, the mass content of AlN is 0.257%; the sum of the mass contents of the elemental Al and Al₄C₃ is 0.103%, and the mass content of a soluble salt is 0.225%.

### Third Example

A device and method for treating a secondary aluminum ash according to embodiments of the invention are as follows.

The secondary aluminum ash is provided, in which a mass content of AlN is 27.63%, and a sum of the mass contents of the elemental Al and Al₄C₃ is 5.94%.

A result calculated by the formula of 0.45+58×X-260×X² is rounded, to obtain an integer of 3.

Where, X=A+B; A is a mass ratio of the elemental Al in the secondary aluminum ash to the secondary aluminum ash; and B is a mass ratio of Al₄C₃ in the secondary aluminum ash to the secondary aluminum ash. That is, X is the sum of the mass contents of the elemental Al and Al₄C₃ in the secondary aluminum ash.

A result calculated by the formula of 22×Z+1.2 is rounded, to obtain an integer of 7; where Z is the mass ratio of AlN in the secondary aluminum ash to the secondary aluminum ash.

That is, the device for treating the secondary aluminum ash includes a first-stage temperature reaction tank to a third-stage temperature reaction tank, and a first-stage thermal insulation reaction tank to a seventh-stage thermal insulation reaction tank.

The above-mentioned secondary aluminum ash is treated as follows.

According to a mass ratio of 1:5, the secondary aluminum ash and the water are weighed, and added into the batching tank for batching, to obtain a slurry. In a conveying process of the slurry, the slurry accounts for 50% of the volumes of the batching tank and various reaction tanks. A temperature of batching of the slurry in the batching tank is controlled as 15°C. Then the slurry sequentially enters the first-stage temperature reaction tank to the third-stage temperature reaction tank, and the calcium hydroxy phosphate is added into the first-stage temperature reaction tank. The addition amount of the calcium hydroxy phosphate is 1.2% of the mass of the secondary aluminum ash. After the slurry reacts in the first-stage temperature reaction tank to the third-stage temperature reaction tank, the temperature of the slurry rises from 15°C to 55°C. Then the slurry sequentially enters the first-stage thermal insulation reaction tank to the seventh-stage thermal insulation reaction tank. Holding temperatures of the first-stage thermal insulation reaction tank to the seventh-stage thermal insulation reaction tank are 92°C. The modified bentonite is added into the first stage thermal insulation reaction tank (first-stage thermal insulation reaction tank), and the fly ash is added into the last stage thermal insulation reaction tank (seventh-stage thermal insulation reaction tank). The addition amount of the modified bentonite is 1.5% of the mass of the secondary aluminum ash, and the addition amount of the fly ash is 0.7% of the mass of the secondary aluminum ash. A time from adding the secondary aluminum ash into the batching tank to forming a fifth slurry is 450 min. A gas generated in the first-stage thermal insulation reaction tank to the seventh-stage thermal insulation reaction tank, after cooled and collected, enters a combustible gas collection system, as a fuel for combustion. Volume ratios of hydrogen and methane in the collected gas are 90.31% and 4.56%, respectively. A volume ratio of an ammonia gas in a gas generated in the first-stage thermal insulation reaction tank to the seventh-stage thermal insulation reaction tank is 95.34%. An ammonia water is prepared from the ammonia gas by a cooling water absorption system. A liquid-solid separation is performed on the slurry after reaction to obtain a filter cake. A moisture content of the filter cake is 24.59%. The filter cake is dried to obtain a recycled high-aluminum material. In the recycled high alumina material, the mass content of AlN is 0.213%; the sum of the mass contents of the elemental Al and Al₄C₃ is 0.097%, and the mass content of a soluble salt is 0.281%.

### Forth Example

A device and method for treating a secondary aluminum ash according to embodiments of the invention are as follows.

The secondary aluminum ash is provided, in which a mass content of AlN is 22.76%, and a sum of the mass contents of the elemental Al and A14C3 is 9.56%.

A result calculated by the formula of 0.45+58×X-260×X² is rounded, to obtain an integer of 4.

Where, X=A+B; A is a mass ratio of the elemental Al in the secondary aluminum ash to the secondary aluminum ash; and B is a mass ratio of Al₄C₃ in the secondary aluminum ash to the secondary aluminum ash. That is, X is the sum of the mass contents of the elemental Al and Al₄C₃ in the secondary aluminum ash.

A result calculated by the formula of 22×Z+1.2 is rounded, to obtain an integer of 6; where Z is the mass ratio of AlN in the secondary aluminum ash to the secondary aluminum ash.

That is, the device for treating the secondary aluminum ash includes a first-stage temperature reaction tank to a fourth-stage temperature reaction tank, and a first-stage thermal insulation reaction tank to a sixth-stage thermal insulation reaction tank.

The above-mentioned secondary aluminum ash is treated as follows.
According to a mass ratio of 1:3, the secondary aluminum ash and the water are weighed, and added into the batching tank for batching, to obtain a slurry. In a conveying process of the slurry, the slurry accounts for 35% of the volumes of the batching tank and various reaction tanks. A temperature of batching of the slurry in the batching tank is controlled as 18°C. Then the slurry sequentially enters the first-stage temperature reaction tank to the fourth-stage temperature reaction tank, and the sodium alginate is added into the first-stage temperature reaction tank. The addition amount of the sodium alginate is 1.5% of the mass of the secondary aluminum ash. After the slurry reacts in the first-stage temperature reaction tank to the fourth-stage temperature reaction tank, the temperature of the slurry rises from 18°C to 50°C. Then the slurry sequentially enters the first-stage thermal insulation reaction tank to the sixth-stage thermal insulation reaction tank. Holding temperatures of the first-stage thermal insulation reaction tank to the sixth-stage thermal insulation reaction tank are 98°C. The steel slag powder is added into the first stage thermal insulation reaction tank (the first-stage thermal insulation reaction tank), and the polysilicate aluminum ferric sulfate is added into the last stage thermal insulation reaction tank (the sixth-stage thermal insulation reaction tank). The addition amount of the steel slag powder is 1.35% of the mass of the secondary aluminum ash, and the addition amount of the polysilicate aluminum ferric sulfate is 0.5% of the mass of the secondary aluminum ash. A time from adding the secondary aluminum ash into the batching tank to forming a fifth slurry is 480 min. A gas generated in the first-stage temperature reaction tank to the fourth-stage temperature reaction tank, after cooled and collected, enters a combustible gas collection system, as a fuel for combustion. Volume ratios of hydrogen and methane in the collected gas are 84.72% and 10.27%, respectively. A volume ratio of ammonia gas in a gas generated in the first-stage thermal insulation reaction tank to the sixth-stage thermal insulation reaction tank is 98.67%. An ammonia water is prepared from the ammonia gas by a cooling water absorption system. A liquid-solid separation is performed on the slurry after reaction to obtain a filter cake. A moisture content of the filter cake is 20.41%. The filter cake is dried to obtain a recycled high-aluminum material. In the recycled high alumina material, the mass content of AlN is 0.182%; the sum of the mass contents of the elemental Al and Al₄C₃ is 0.127%, and the mass content of a soluble salt is 0.245%.

### Fifth Example

A device and method for treating a secondary aluminum ash according to embodiments of the invention are as follows.

The secondary aluminum ash is provided, in which a mass content of AlN is 6.35%, and a sum of the mass contents of the elemental Al and Al₄C₃ is 7.32%.

A result calculated by the formula of 0.45+58×X-260×X² is rounded, to obtain an integer of 3.

Where, X=A+B; A is a mass ratio of the elemental Al in the secondary aluminum ash to the secondary aluminum ash; and B is a mass ratio of Al₄C₃ in the secondary aluminum ash to the secondary aluminum ash. That is, X is a sum of the mass contents of the elemental Al and Al₄C₃ in the secondary aluminum ash.

A result calculated by the formula of 22×Z+1.2 is rounded, to obtain an integer of 3, where Z is the mass ratio of AlN in the secondary aluminum ash to the secondary aluminum ash.

That is, the device for treating the secondary aluminum ash includes a first-stage temperature reaction tank to a third-stage temperature reaction tank, and a first-stage thermal insulation reaction tank to a third-stage thermal insulation reaction tank.

The above-mentioned secondary aluminum ash is treated as follows.

According to a mass ratio of 1:2, the secondary aluminum ash and the water are weighed and added into the batching tank for batching, to obtain a slurry. In a conveying process of the slurry, the slurry accounts for 45% of the volumes of the batching tank and various reaction tanks. A temperature of batching of the slurry in the batching tank is controlled as 10°C. Then the slurry sequentially enters the first-stage temperature reaction tank to the third-stage temperature reaction tank, and the hydroxycalcium phosphate is added into the first-stage temperature reaction tank. The addition amount of the hydroxycalcium phosphate is 1.3% of the mass of the secondary aluminum ash. After the slurry reacts in the first-stage temperature reaction tank to the third-stage temperature reaction tank, the temperature of the slurry rises from 10°C to 60°C. Then the slurry sequentially enters the first-stage thermal insulation reaction tank to the third-stage thermal insulation reaction tank. Holding temperatures of the first-stage thermal insulation reaction tank to the third-stage thermal insulation reaction tank are 100°C. The hydroxylapatite is added into the first stage thermal insulation reaction tank (the first-stage thermal insulation reaction tank), and the fly ash is added into the last stage thermal insulation reaction tank (the third-stage thermal insulation reaction tank). The addition amount of the hydroxylapatite is 0.5% of the mass of the secondary aluminum ash, and the addition amount of the polysilicate aluminum ferric sulfate is 1.5% of the mass of the secondary aluminum ash. A time from adding the secondary aluminum ash into the batching tank to forming a fifth slurry is 360 min. A gas generated in the first-stage temperature reaction tank to the third-stage temperature reaction tank, after cooled and collected, enters a combustible gas collection system , as a fuel for combustion. Volume ratios of hydrogen and methane in the collected gases are 85.39% and 9.63%, respectively. A volume ratio of an ammonia gas in a gas generated in the first-stage thermal insulation reaction tank to the third-stage thermal insulation reaction tank is 96.25%. An ammonia water is prepared from the ammonia gas by a cooling water absorption system. A liquid-solid separation is performed on the slurry after reaction to obtain a filter cake. A moisture content of the filter cake is 18.67%. The filter cake is dried to obtain a recycled high-aluminum material. In the recycled high alumina material, the mass content of AlN is 0.227%, the sum of the mass contents of the elemental Al and Al₄C₃ is 0.143%, and the mass content of a soluble salt is 0.177%.

### First Comparative example

A device and method for treating a secondary aluminum ash according to the comparative example of the invention are as follows.

The secondary aluminum ash is provided, in which a mass content of AlN is 32.63%, and a sum of the mass contents of the elemental Al and Al₄C₃ is 3.48%.

A result calculated by the formula of 0.45+58×X-260×X² is rounded, and an integer of 2 is obtained.

Where, X=A+B; A is a mass ratio of the elemental Al in the secondary aluminum ash to the secondary aluminum ash; and B is a mass ratio of Al₄C₃ in the secondary aluminum ash to the secondary aluminum ash. That is, X is a sum of the mass contents of the elemental Al and Al₄C₃ in the secondary aluminum ash.

A result calculated by the formula of 22×Z+1.2 is rounded, to obtain an integer of 8, where Z is the mass ratio of AlN in the secondary aluminum ash to the secondary aluminum ash.

That is, the device for treating the secondary aluminum ash includes two stages of temperature reaction tanks, and eight stages of thermal insulation reaction tanks.

The above-mentioned secondary aluminum ash is treated as follows.

According to a mass ratio of 1:4, the secondary aluminum ash and the water are weighed, and added into the batching tank for batching, to obtain a slurry. In a conveying process of the slurry, the slurry accounts for 40% of the volumes of the batching tank and various reaction tanks. A temperature of batching of the slurry in the batching tank is controlled as 23 °C. Then the slurry enters the first-stage temperature reaction tank and then the second-stage temperature reaction tank, and the ammonium ferric citrate is added into the first-stage temperature reaction tank. The addition amount of the ammonium ferric citrate is 0.8% of the mass of the secondary aluminum ash. After the slurry reacts in the first-stage temperature reaction tank to the second-stage temperature reaction tank, the temperature of the slurry rises from 23°C to 45 °C. Then the slurry sequentially enters the first-stage thermal insulation reaction tank to the third-stage thermal insulation reaction tank. Holding temperatures of the first-stage thermal insulation reaction tank to the eighth-stage thermal insulation reaction tank are 95 °C. Merely the desulfurization gypsum is added into the last stage thermal insulation reaction tank (the eighth-stage thermal insulation reaction tank). The addition amount of the desulfurization gypsum is 1.2% of the mass of the secondary aluminum ash. A time from adding the secondary aluminum ash into the batching tank to forming a fifth slurry is 310 min. A gas generated in the first-stage temperature reaction tank to the second-stage temperature reaction tank, after cooled and collected, enters the combustible gas collection system as a fuel for combustion. Volume ratios of hydrogen and methane in the collected gas are 85.79% and 11.25%, respectively. A volume ratio of an ammonia gas in a gas generated in the first-stage thermal insulation reaction tank to the eighth-stage thermal insulation reaction tank is 95.63%. An ammonia water is prepared form the ammonia gas by a cooling water absorption system. A liquid-solid separation is performed on the slurry after reaction to obtain a filter cake. A moisture content of the filter cake is 23.32%. The filter cake is dried to obtain a recycled high-aluminum material. In the recycled high alumina material, the mass content of AlN is 3.56%, the sum of the mass contents of the elemental Al and Al₄C₃ is 0.128%, and the mass content of a soluble salt is 0.257%.

### Second comparative example

A device and a method for treating for a secondary aluminum ash according to the comparative example of the invention are as follows.

The secondary aluminum ash is provided, in which a mass content of AlN is 27.63%, and a sum of the mass contents of the elemental Al and Al₄C₃ is 5.94%.

A result calculated by the formula of 0.45+58×X-260×X² is rounded, to obtain an integer of 3.

Where, X=A+B; A is a mass ratio of the elemental Al in the secondary aluminum ash to the secondary aluminum ash; and B is a mass ratio of Al₄C₃ in the secondary aluminum ash to the secondary aluminum ash. That is, X is a sum of the mass contents of the elemental Al and Al₄C₃ in the secondary aluminum ash.

A result calculated by the formula of 22×Z+1.2 is rounded, to obtain an integer of 7, where Z is the mass ratio of AlN in the secondary aluminum ash to the secondary aluminum ash.

That is, the device for treating the secondary aluminum ash includes two stages of temperature reaction tanks, and seventh stages of thermal insulation reaction tanks.

The above-mentioned secondary aluminum ash is treated as follows.

According to a mass ratio of 1:5, the secondary aluminum ash and the water are weighed, and added into the batching tank for batching, to obtain a slurry. In a conveying process of the slurry, the slurry accounts for 30% of the volumes of the batching tank and various reaction tanks. A temperature of batching of the slurry in the batching tank is controlled as 15°C. Then the slurry sequentially enters the first-stage temperature reaction tank to the third-stage temperature reaction tank, and the hydroxycalcium phosphate is added into the first-stage temperature reaction tank. The addition amount of the hydroxycalcium phosphate is 1.2% of the mass of the secondary aluminum ash. After the slurry reacts in the first-stage temperature reaction tank to the third-stage temperature reaction tank, the temperature rises from 15°C to 55°C. Then the slurry sequentially enters the first-stage thermal insulation reaction tank to the seventh-stage thermal insulation reaction tank. Holding temperatures of the first-stage thermal insulation reaction tank to the seventh-stage thermal insulation reaction tank are 92°C. Merely the modified bentonite is added into the last stage thermal insulation reaction tank (the seventh-stage thermal insulation reaction tank). The addition amount of the modified bentonite is 1.5% of the mass of the secondary aluminum ash. A time from adding the secondary aluminum ash into the batching tank to forming the fifth slurry is 600 min. A gas generated in the first-stage temperature reaction tank to the third-stage temperature reaction tank, after cooled and collected, enters a combustible gas collection system as a fuel for combustion. Volume ratios of hydrogen and methane in the collected gas are 89.65% and 3.72%, respectively. A volume ratio of an ammonia gas in a gas generated in the first-stage thermal insulation reaction tank to the seventh-stage thermal insulation reaction tank is 97.43%. An ammonia water is prepared from the ammonia gas by a cooling water absorption system. A liquid-solid separation is performed on the slurry after reaction to obtain a filter cake. A moisture content of the filter cake is 31.24%. The filter cake is dried to obtain a recycled high-aluminum material. In the recycled high alumina material, the mass content of AlN is 0.231%; the sum of the mass contents of the elemental Al and Al₄C₃ is 0.147%, and the mass content of a soluble salt is 0.744%.

### Comparative example 3

A device and method for treating a secondary aluminum ash according to the comparative example of the invention are as follows.

The secondary aluminum ash is provided, in which a mass content of AlN is 22.76%, and a sum of the mass contents of the elemental Al and Al₄C₃ is 9.56%.

A result calculated by the formula of 0.45+58×X-260×X² is rounded, to obtain an integer of 4.

Where, X=A+B; A is a mass ratio of the elemental Al in the secondary aluminum ash to the secondary aluminum ash; and B is a mass ratio of Al₄C₃ in the secondary aluminum ash to the secondary aluminum ash. That is, X is a sum of the mass contents of the elemental Al and Al₄C₃ in the secondary aluminum ash.

A result calculated by the formula of 22×Z+1.2 is rounded, to obtain an integer of 6, where Z is the mass ratio of AlN in the secondary aluminum ash to the secondary aluminum ash.

That is, the device for treating the secondary aluminum ash includes four stages of temperature reaction tanks, and six stages of thermal insulation reaction tanks.

The above-mentioned secondary aluminum ash is treated as follows.

According to a mass ratio of 1:3, the secondary aluminum ash and the water are weighed, and added into the batching tank for batching, to obtain a slurry. In a conveying process of the slurry, the slurry accounts for 35% of the volumes of the batching tank and various reaction tanks. A temperature of batching of the slurry in the batching tank is controlled as 18°C. After the slurry reacts in the first-stage temperature reaction tank to the fourth-stage temperature reaction tank, the temperature of the slurry rises from 18°C to 50 °C. Then the slurry sequentially enters the first-stage thermal insulation reaction tank to the sixth-stage thermal insulation reaction tank. Holding temperatures of the first-stage thermal insulation reaction tank to the sixth-stage thermal insulation reaction tank are 98 °C. The steel slag micro powder is added into the first stage thermal insulation reaction tank (the first-stage thermal insulation reaction tank), and the polysilicate aluminum ferric sulfate is added into the last stage thermal insulation reaction tank (the sixth-stage thermal insulation reaction tank). The addition amount of the steel slag micropowder is 1.35% of the mass of the secondary aluminum ash, and the addition amount of the polysilicate aluminum ferric sulfate is 0.5% of the mass of the secondary aluminum ash. A time from adding the secondary aluminum ash into the batching tank to forming the fifth slurry is 450 min. A gas generated in the first-stage temperature reaction tank to the fourth-stage temperature reaction tank, after cooled and collected, enters a combustible gas collection system, as a fuel for combustion. Volume ratios of hydrogen and methane in the collected gas are 72.34% and 3.12%, respectively. A volume ratio of an ammonia gas in a gas generated in the first-stage thermal insulation reaction tank to the sixth-stage thermal insulation reaction tank is 88.15%. An ammonia water is prepared by the ammonia gas through a cooling water absorption system. A liquid-solid separation is performed on the slurry after reaction to obtain a filter cake. A moisture content of the filter cake obtained is 23.98%. The filter cake is dried to obtain a recycled high-aluminum material. In the recycled high alumina material, the mass content of AlN is 0.296%, the sum of the mass contents of the elemental Al and Al₄C₃ is 1.781%, and the mass content of a soluble salt is 0.233%.

### Effects and data of related experiments

It can be seen from the above examples and comparative examples that, with a device and method for treating a secondary aluminum ash, the liquid-solid separation is performed on the slurry after reaction, and the moisture content of the filter cake obtained after the liquid-solid separation is performed on the slurry is less than 25%. The mass content of AlN in the recycled high-alumina material is less than 0.3%, the sum of the mass contents of the elemental Al and Al₄C₃ is less than 0.2%, and the mass content of the soluble salt is less than 0.1%. The volume ratio of hydrogen and methane in the gas collected from the temperature reaction tanks is larger than 93%, and the volume ratio of the ammonia gas in the gas collected from the thermal insulation reaction tanks is larger than 95%. On the basis of the second example, third example and fourth example, the steps of adding the activator, desalter and stabilizer are cancelled respectively in the first comparative example, second comparative example and third comparative example, and their treatment effects are obviously changed. In the first comparative example, since no activator is added, the mass content of AlN in the recycled high-alumina material obtained by drying the filter cake is 3.56%, which is much higher than the mass content of AlN in the recycled high alumina material obtained in the case of added activator. In the second comparative example, since no desalter is added, the slurry after the reaction is carried out the liquid-solid separation, the moisture content of the obtained filter cake is 31.24%, and the mass content of soluble salt in the recycled high-alumina material obtained by drying the filter cake is 0.744%, and both the dehydration and desalting effects of the filter cake are poor. In the third comparative example, since no stabilizer is added, the sum of mass contents of the elemental Al and Al₄C₃ in the obtained recycled high alumina material is 1.781%, and effects of the hydrolysis reaction of the elemental Al and Al₄C₃ are poor.

Various embodiments of the invention may exist in a form of a range. It should be understood that, the description in the form of the range is merely for convenience and conciseness, and should not be construed as a rigid limitation on the scope of the invention. Consequently, it should be considered that, the description of the range has specifically disclosed all possible subranges and a single numerical value within the range. For example, it should be considered that, the description of the range from 1 to 6 has specifically disclosed sub-ranges, such as from 1 to 3, from 1 to 4, from 1 to 5, from 2 to 4, from 2 to 6, from 3 to 6, and so on, as well as single numerical values within the range, such as 1, 2, 3, 4, 5 and 6. It applies regardless of the scope. In addition, whenever a numerical range is indicated in the invention, it means a number (fraction or integer) including any reference within the indicated range.

In the invention, orientation words such as "up" and "down" are specific to a graphic direction in the attached drawing direction unless otherwise specified. In addition, in the specification of the invention, terms "include", "include" and so on mean "including but not limited to". Moreover, the terms "include", "include" or any other variation thereof are intended to cover non-exclusive inclusion, so that a process, method, good or apparatus including a series of elements includes not only those elements, but also other elements not explicitly listed or elements inherent to such process, method, good or apparatus. Without more restrictions, an element defined by a phrase "including......" does not exclude an existence of other identical elements in the process, method, good or apparatus including the element. In this paper, relational terms such as "first" and "second" are merely used to distinguish one entity or operation from another entity or operation, and do not necessarily require or imply any such actual relationship or order between these entities or operations. In this paper, "and/or", which describes a relationship of related objects, means that there may be three kinds of relationships, for example, A and/or B, which may mean that A exists alone, A and B exist at the same time, and B exists alone. For the relationship between more than three related objects described by "and/or", it means that any one of these three related objects may exist alone, or at least two of them may exist at the same time. For example, for A, and/or B and and/or C, it may mean that any one of A, B and C exists alone, or any two of them or three of them exist at the same time. In this paper, "at least one" refers to one or more, and "a plurality" refers to two or more. "At least one", "at least one of the following" or similar expressions refer to any combination of these items, including any combination of single item (s) or a plurality of items. For example, "at least one of a, b or C" or "at least one of a, b and C" may all mean: a, b, c, a-b (that is, a and b), a-c, b-c, or a-b-c, wherein a, b and c may be single or a plurality respectively.

The foregoing are merely specific embodiments of the invention, so that a person skilled in the art can understand or realize the invention. Various modifications to these embodiments will be obvious to a person skilled in the art, and the general principles defined herein may be implemented in other embodiments without departing from the spirit or scope of the invention. Therefore, the invention is not to be limited to the embodiments shown in this paper herein, but is to be accorded the widest scope consistent with the principles and novel features applied in this paper herein.

## Claims

1. A device for treating a secondary aluminum ash, comprising:
a batching tank, provided with a feeding port for adding an aluminum ash;
a temperature reaction unit; and
a thermal insulation reaction unit; wherein,
the batching tank, the temperature reaction unit and the thermal insulation reaction unit are sequentially in communication with one another; the temperature reaction unit comprises n temperature reaction tanks connected in series, which are respectively a first-stage temperature reaction tank, a second-stage temperature reaction tank ... and an n^{th}-stage temperature reaction tank; and the n temperature reaction tanks connected in series each are provided with a first gas outlet for exporting gas; and
the thermal insulation reaction unit comprises m thermal insulation reaction tanks connected in series, which are respectively a first-stage thermal insulation reaction tank, a second-stage thermal insulation reaction tank ...and an m^{th}-stage thermal insulation reaction tank; and the m thermal insulation reaction tanks connected in series each are provided with a second gas outlet for exporting gas.

2. The device for treating the secondary aluminum ash according to claim 1, wherein the n is an integer obtained by rounding a result calculated by a formula of 0.45+58xX - 260×X²;
where, X=A+B; A is a mass ratio of an elemental Al in the secondary aluminum ash to the secondary aluminum ash; and B is a mass ratio of Al₄C₃ in the secondary aluminum ash to the secondary aluminum ash.

3. The device for treating the secondary aluminum ash according to claim 1, wherein the m is an integer obtained by rounding a result calculated by a formula of 22×Z+1.2;
where, Z is a mass ratio of AlN in the secondary aluminum ash to the secondary aluminum ash.

4. A method for treating a secondary aluminum ash, comprising:
providing the device for treating the secondary aluminum ash according to any one of claims 1 to 3;
adding the secondary aluminum ash and water into the batching tank from the feeding port, to form a first slurry in the batching tank;
importing the first slurry into the first-stage temperature reaction tank, and simultaneously adding a stabilizer for promoting hydrolyses of an elemental Al and Al₄C₃ and inhibiting a hydrolysis of AlN into the first-stage temperature reaction tank, to form a second slurry;
making the second slurry flow from the first-stage temperature reaction tank to the n^{th}-stage temperature reaction tank, to form a third slurry in the n^{th}-stage temperature reaction tank; and
collecting a gas generated by reactions in the first-stage temperature reaction tank to the n^{th}-stage temperature reaction tank;
importing the third slurry into the first-stage thermal insulation reaction tank; and simultaneously adding an activator for enhancing a hydrolysis activity of AlN into the first-stage thermal insulation reaction tank, to form a fourth slurry;
making the fourth slurry flow from the first-stage thermal insulation reaction tank to the n^{th}-stage thermal insulation reaction tank; and adding a desalter to the n^{th}-stage thermal insulation reaction tank, so that the desalter is mixed and reacts with the fourth slurry to form a fifth slurry, wherein
the desalter is used for increasing a particle size of solid particles and promoting a precipitation of salt substances; and collecting a gas generated by reactions in the first-stage thermal insulation reaction tank to the n^{th}-stage thermal insulation reaction tank; and
filtering the fifth slurry to obtain a filtrate, and concentrating and crystallizing the filtrate.

5. The method for treating the secondary aluminum ash according to claim 4, wherein a time from adding the secondary aluminum ash into the batching tank to forming the fifth slurry is 30 min to 600 min.

6. The method for treating the secondary aluminum ash according to claim 4, wherein, X=A+B; A is a mass ratio of the elemental Al in the secondary aluminum ash to the secondary aluminum ash; B is a mass ratio of Al₄C₃ in the secondary aluminum ash to the secondary aluminum ash; and X is less than or equal to 10%.

7. The method for treating the secondary aluminum ash according to claim 4, wherein a temperature in the batching tank is controlled as 10°C~30°C.

8. The method for treating the secondary aluminum ash according to claim 4, wherein temperatures increases gradually from the first-stage temperature reaction tank to the n^{th}-stage temperature reaction tank, a temperature of the first-stage temperature reaction tank being 10°C ~30 °C, a temperature of the n^{th}-stage temperature reaction tank being 40 °C ~60 °C; and/or,
the temperatures of all the temperature reaction tanks are 90°C∼100°C.

9. The method for treating the secondary aluminum ash according to claim 4, wherein, the stabilizer comprises at least one selected from a group consisting of a calcium dihydrogen phosphate, calcium hydroxy phosphate, ammonium ferric citrate and sodium alginate; and/or, the activator comprises at least one selected form a group consisting of a steel slag micro powder, dry desulfurization ash, modified bentonite and hydroxyapatite; and/or,
the desalter comprises at least one selected form a group consisting of a polysilicate aluminum ferric sulfate, fly ash and desulfurized gypsum.

10. The method for treating the secondary aluminum ash according to claim 9, wherein an addition amount of the stabilizer is 0.5%-1.5% of a mass of the secondary aluminum ash; and/or, an addition amount of the activator is 0.5%-2% of the mass of the secondary aluminum ash; and/or,
an addition amount of the stabilizer of the desalter is 0.5%-1.5% of the mass of the secondary aluminum ash.
